# EUROPEAN PATENT APPLICATION

(11) **EP 0 990 809 A1**
(43) Date of publication of application: **05.04.2000**
(21) Application number: 99202930.6
(22) Date of filing: 09.09.1999
(51) Int. Cl.: F16D 1/06

(54) **System for directly coupling two coaxial rotary shafts, and the relative device**

(30) Priority: 02.10.1998 IT RE980049 U
(71) Applicant: Annovi Reverberi S.p.A., 41100 Modena (IT); Fabbri, Fabrizio, 41100 Modena (IT)
(72) Inventor: Fabbri, Fabrizio, 41100 Modena (IT)
(74) Representative: Corradini, Corrado

(57) **Abstract**

System and device for directly coupling two coaxial rotary shafts (1,4), one of which is to transmit torque to the other, comprising a sleeve (3) having the same shape as the male shaft (1) and precisely reproducing its profile, and being of such a thickness as to be able to be inserted in the female shaft (4) with precision.

## Description

This invention relates in general to those means provided for coupling two rotary shafts, one of which transmits motion to the other.

The known art teaches that the ends of two shafts, one of which is to transmit torque to the other, can be coupled by:
- mechanical connection,
- connection based mainly on a friction phenomenon of the means,
- connection based on an electromagnetic phenomenon.

In particular, this invention relates to the mechanical connection of two shaft ends.

Couplings of various types, namely of fixed, elastic, semi-elastic, expansion, deformable, safety or limiting type are currently used, depending on the application and the mechanical characteristics of the connection.

All coupling types perfectly satisfy the purpose for which they are designed, however they have the drawback of high cost and an increase in the axial space consumed by the two shafts.

For these reasons there is an increasing tendency, especially in low-cost applications, to make connections without an intermediate coupling, by using a male shaft directly coupled to a female shaft. In this type of connection the torque transmission is achieved by one or more keys, or splined toothing, or similar means.

Although this solution reduces both the cost and the axial space consumed by the two shafts, with the passing of time it presents the phenomenon known as fretting corrosion, which consumes the material, making it difficult to disassemble them.

In this respect, if the two shafts are directly coupled they become locked together with such a force that to uncouple them they have to cut and replaced.

The object of the invention is to overcome the said drawback within the framework of a rational, reliable and low-cost solution.

The invention attains said object by positioning an insert of suitable material between the contacting surfaces of the two shafts, such that the material of the male shaft never comes directly into contact with the metal of the female shaft, so preventing fretting corrosion.

In detail, said interspace is formed by a sleeve of synthetic or elastomer material, having the same shape as the male shaft and precisely reproducing its profile, to enter the female shaft with precision.

To better clarify the constructional and operational characteristics of the invention, three preferred embodiments are described by way of non-limiting example and illustrated on the accompanying drawings.
Figure 1 is an exploded view of the invention.
Figure 2 is an exploded perspective view of a second embodiment of the invention.
Figure 3 is an exploded perspective view of a third embodiment of the invention.

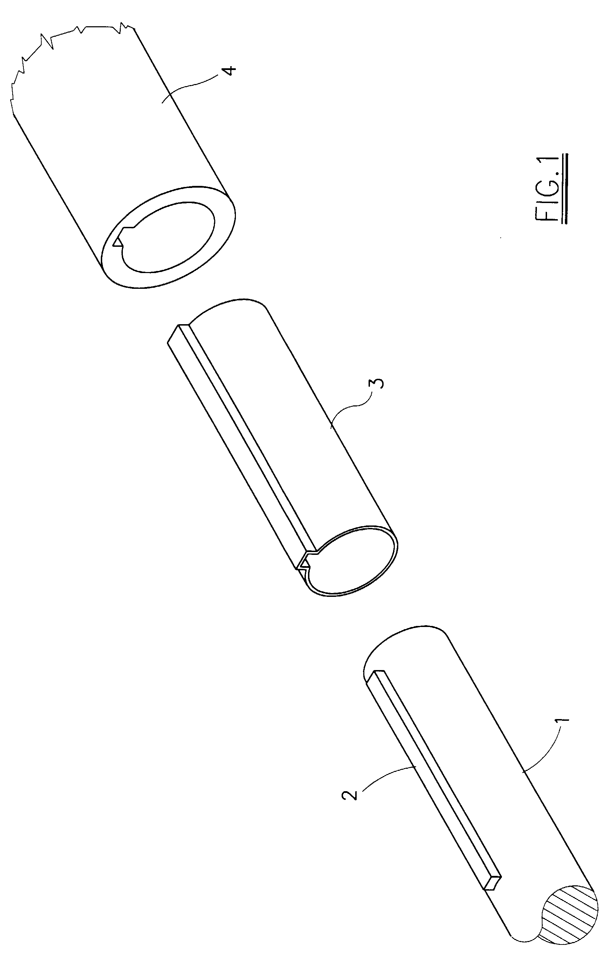

Figure 1 shows the male shaft 1, upperly comprising the key 2. On the male shaft 1 there is mounted the sleeve 3, the shape of which is identical to that portion of the male shaft comprising the upper key 2.

When the sleeve 3 has been mounted on the male shaft 1, the female shaft 4 is mounted on this latter, to hence achieve the desired direct coupling.

The sleeve 3 is constructed of synthetic (plastic) material, this material having proved particularly suitable for the purpose as the sleeve is subjected only to compression forces during the rotation of the drive shaft.

The thickness of the sleeve is preferably between 0.2 and 3 millimetres.

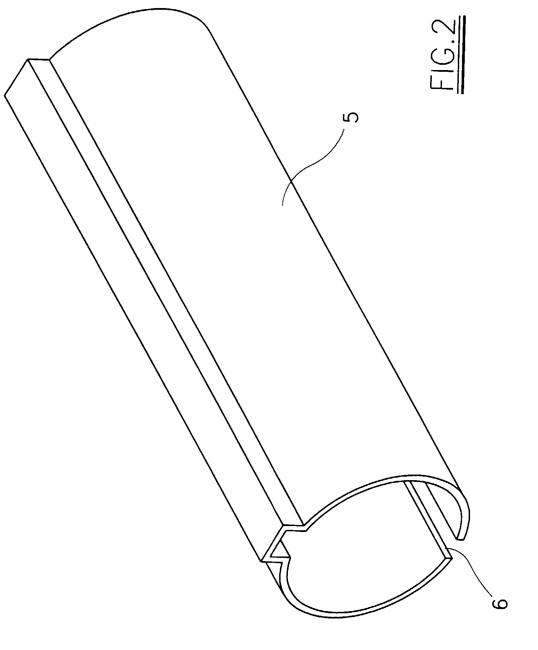

Figure 2 shows a second embodiment of the sleeve, indicated in that figure by the reference numeral 5. In this case the sleeve 5 differs from the sleeve 3 by lowerly comprising a cut 6 extending along its entire length, to facilitate its mounting on the male shaft 1.

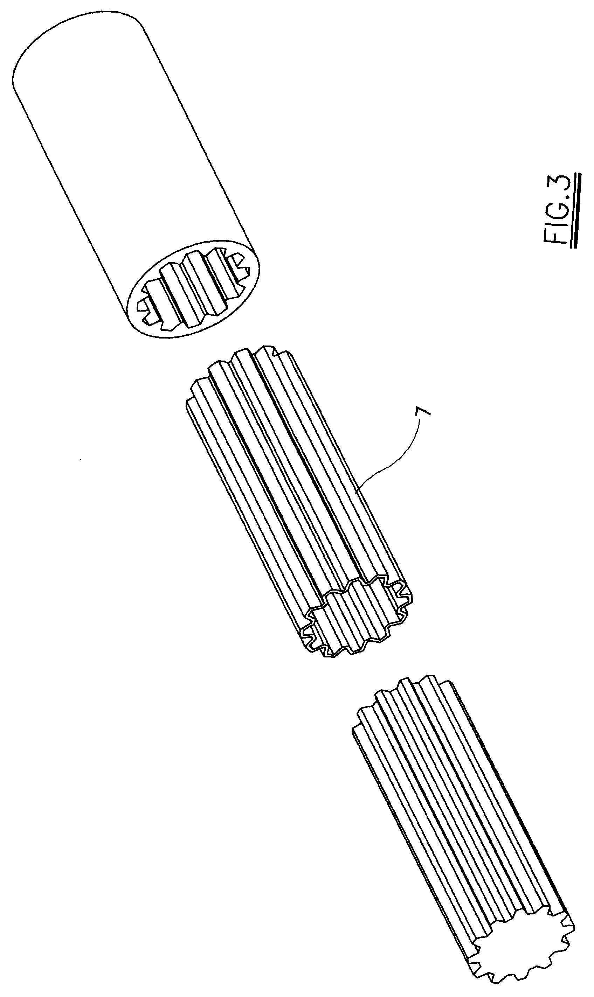

Figure 3 shows a sleeve 7 of different shape from the preceding, and suitable for application to splined shafts. The sleeve 7 can also comprise a full-length cut, not shown, identical to the cut 6.

Finally, said sleeves 3, 5, 7 can be closed by an end wall at that end corresponding to the free end of the male shaft.

Said end wall is provided with at least one bleed hole for the air.

## Claims

1. A system for directly coupling two partially copenetrating coaxial rotary shafts, one of which is to transmit torque to the other, characterised by comprising an insert having the same profile as the male shaft and positioned between the outer surface of the male shaft and the inner surface of the female shaft to be coupled to said male shaft.

2. A device for directly coupling two coaxial rotary shafts, one of which is to transmit torque to the other, characterised by comprising a sleeve having the same shape as the male shaft and precisely reproducing its profile, and being of such a thickness as to be able to be inserted in the female shaft with precision.

3. A device for directly coupling two shafts as claimed in claim 2, characterised in that said sleeve is constructed of synthetic material.

4. A device for directly coupling two shafts as claimed in claim 2, characterised in that said sleeve is constructed of an elastomer.

5. A device for directly coupling two shafts as claimed in claim 2, characterised in that said sleeve has a thickness of between 0.2 and 3 millimetres.

6. A device as claimed in claims 2, 3, 4 and 5, characterised in that said sleeve comprises in its lateral surface a longitudinal cut which extends along the entire length of the sleeve.

7. A device for directly coupling two shafts as claimed in claims 2, 3, 4, 5 and 6, characterised in that said sleeve has an end wall provided with at least one hole.
